# EUROPEAN PATENT SPECIFICATION

(11) **EP 3 194 676 B1**
(45) Date of publication and mention of the grant of the patent: **05.12.2018**
(21) Application number: 15775397.1
(22) Date of filing: 18.09.2015
(51) Int. Cl.: E03F 1/00, E03F 5/10

(54) **A PLASTIC INFILTRATION UNIT, A PLURALITY OF PLASTIC INFILTRATION UNITS AND A METHOD OF MANUFACTURING A PLURALITY OF PLASTIC INFILTRATION UNITS**
KUNSTSTOFFVERSICKERUNGSEINHEIT, EINE VIELZAHL VON KUNSTSTOFFVERSICKERUNGSEINHEITEN UND VERFAHREN ZUR HERSTELLUNG EINER VIELZAHL VON KUNSTSTOFFVERSICKERUNGSEINHEITEN
UNITÉ D'INFILTRATION EN PLASTIQUE, PLURALITÉ D'UNITÉS D'INFILTRATION EN PLASTIQUE ET PROCÉDÉ DE FABRICATION D'UNE PLURALITÉ D'UNITÉS D'INFILTRATION EN PLASTIQUE

(30) Priority: 19.09.2014 NL 1040959
(43) Date of publication of application: 26.07.2017
(73) Proprietor: Wavin B.V., 8011 CW Zwolle (NL)
(72) Inventor: DIJK, Berend Jan van, NL-7777 ST Schuinesloot (NL); SCHEER, Marco van der, NL-7871 PM Klijndijk (NL)
(74) Representative: Hoffmann Eitle
(86) International application number: PCT/EP2015/071460
(87) International publication number: WO 2016/042139

(56) References cited:
- EP-A1- 2 592 194
- WO-A1-2011/089690
- JP-A- 2010 037 941
- US-B1- 6 626 609

## Description

The present invention relates to a plastic infiltration unit, a plurality of plastic infiltration units and a method of manufacturing a plurality of plastic infiltration units.

Plastic infiltration units are known. Infiltration units (also known as attenuation units depending on the deployment conditions of the unit) are for the temporary storage of excess rainwater, enabling controlled discharge. They are used for managing intense rainfall run-off and for reducing the risk of flooding. When the water stored in the unit is later discharged into a water impermeable system, such as a sewer, the unit may sometimes be referred to as an attenuation unit. When the stored water is later discharged into a water permeable system, such as the ground, the unit is generally referred to as infiltration units. Where reference is made in this text to an infiltration unit, it may refer to a unit suitable for attenuation (attenuation unit) and/or infiltration (infiltration unit).

Conventionally, plastic infiltration units may simply be stacked one on top of each other and next to each other. This has a disadvantage that no overall volume decrease is achieved. Thus, storing and transporting the units can be expensive. Further, the stacked units by virtue of their relatively large total volume may be complex to handle. Thus, manpower costs may also be large.

Whilst it may be possible to stack certain infiltration units inside one another to therefore reduce the overall volume of a stack of infiltration units, this is only possible with certain types of infiltration unit, for example, cone shaped units. Further, cone type units, once stacked and arranged together in storage, have a profile which may be hazardous for operators attempting to stand or walk on top of the stacked units. This results in a less safe working environment for operators. JP 2010 037941 A is concerned with an infiltration tank, and discloses the features of the preamble of claim 1. WO 2011/089690 A1 is concerned with a framework block.

It is an object of the invention to reduce the storage and transport costs of the plastic infiltration unit without compromising the total effective volume of each plastic infiltration unit. It is a further object to reduce the environmental impact of the transport of plastic infiltration units. In accordance with one aspect of the invention, there is provided a plastic infiltration unit as defined in claim 1.

In this way, a plastic infiltration unit and another (second) plastic infiltration unit can be held in position together for storage and transport in such a way that the total volume to be stored or transported is reduced. In particular, in this way, the at least one pillar of one plastic infiltration unit is accommodated in the space between, the at least one pillar and top deck of another plastic infiltration unit. The reduction in the volume to be stored or transported results in a reduction in costs and a reduction in the environmental impact of storing and transporting such units. The present invention provides the further advantage that the connectors provide a form fixing function to prevent deformation of the plastic infiltration units in transport and storage. According to a further aspect of the disclosure, there is provided an assembly comprising at least two plastic infiltration units, including a first plastic infiltration unit and. a second plastic infiltration unit, wherein each plastic infiltration unit comprises a top deck which extends in a plane , the top deck having an underside, at least one pillar extending in a direction from the top deck for supporting the top deck, wherein the top deck comprises at least one first integrated connector and the at least one pillar comprises at least one. second integrated connector, for temporarily holding the first plastic infiltration unit with the second plastic infiltration unit, the at least one pillar comprising at least one another second integrated connector, wherein the at least two plastic infiltration units are connectable, so that in a coupled arrangement, the at least one pillar of the second plastic infiltration unit is held in position at the underside of the top deck of the second plastic infiltration unit. According to a yet further aspect of the disclosure, there is provided a method of manufacturing a plurality of plastic infiltration units comprising the steps of: producing a plastic infiltration unit according to any preceding claim with another plastic infiltration unit according to any preceding claim, using a molding process and coupling the plastic infiltration unit and the another plastic infiltration unit when the plastic infiltration unit and the another plastic infiltration unit are still warm from molding process).

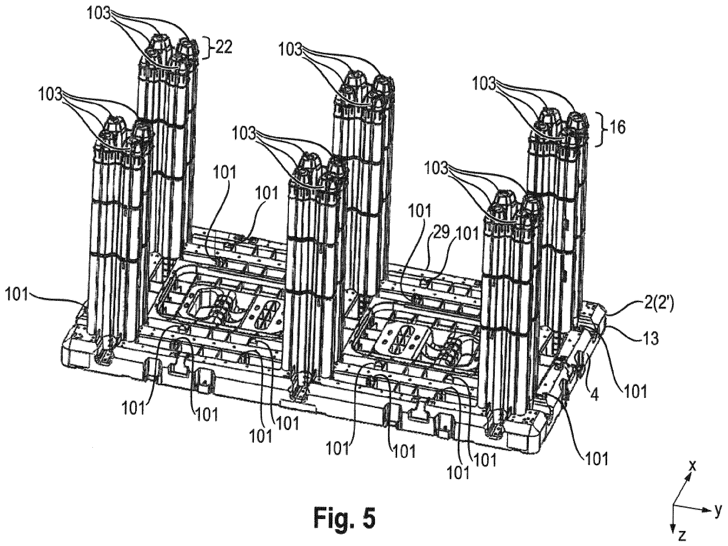

The invention, and various embodiments thereof, will further be explained on the basis of examples, with reference made to the drawings, in which:
Fig, 1 shows a plastic infiltration unit according to an embodiment of the invention;
Fig, 2 shows a side view (along the y direction) of a. plastic infiltration unit according to an embodiment of the invention;
Fig, 3 shows a side view (along the x direction) of a plastic infiltration unit according to an embodiment of the invention
Fig, 4 shows a top view (bird's eye view) of a plastic infiltration unit according to an embodiment of the invention; Fig. 5 shows an underside view of a plastic infiltration unit according to an embodiment of the invention;
Fig. 6a shows a side view (along the y direction) of a plastic infiltration unit aligned with respect to another (second) plastic infiltration unit prior to the plastic infiltration unit and the another plastic infiltration unit becoming temporarily coupled, according to an embodiment of the invention;
Fig 6b shows a side view (along the y direction) of the plastic infiltration unit and the another (second) plastic infiltration unit of Fig. 6a in a temporarily coupled arrangement, according to an embodiment of the invention;
Fig. 7 shows a detail of Fig. 6a, in particular, Fig. 7 shows the at least one first integrated connector of the plastic infiltration unit in alignment with the at least one second integrated connector of the another plastic infiltration unit prior to becoming temporarily coupled, according to an embodiment of the invention;
Fig. 8a shows a detail of Fig. 6a and Fig. 7, in particular, Fig. 8a shows a first integrated connector of the plastic infiltration unit in alignment with the second integrated connector of the another plastic infiltration unit prior to becoming temporarily coupled, according to an embodiment of the invention;
Fig. 8b shows the detail of Fig. 8a in a temporarily coupled arrangement according to an embodiment of the invention;
Fig. 9a shows a first integrated connector located in the vicinity of the periphery of the underside of the top deck according to an embodiment of the invention;
Fig. 9b shows a pair of first integrated connectors located between the pillars of the plastic infiltration unit according to an embodiment of the invention;
Fig. 10a shows a projection and a recess formed in the top deck of a plastic infiltration unit and an another (second) upended plastic infiltration unit, prior to the upper surface of the plastic infiltration unit coming into contact with the upended upper surface of the another plastic infiltration unit, according to an embodiment of the invention;
Fig. 10b shows the plastic infiltration unit and another plastic infiltration unit of Fig. 10a when the upper surface of the plastic infiltration unit is brought into contact with the upended upper surface of the another plastic infiltration unit, according to an embodiment of the invention;
Fig. 11a shows a first pair of plastic infiltration units and a second pair of plastic infiltration units aligned for stacking upon each other according to an embodiment of the invention;
Fig. 11b shows a detail of Fig. 11a, in particular, Fig. 11b shows the at least one projection and the at least one recess on the respective facing top decks of the first and second pair of plastic infiltration units, to prevent sliding between the first and second pair of plastic infiltration units, according to an embodiment of the invention;
Fig. 11c shows the first and second pair of plastic infiltration units of Fig. 11a in a stacked arrangement, according to an embodiment of the invention;
Fig. 12 shows a first pair of plastic infiltration units and a second pair of plastic infiltration units arranged according to an embodiment of the invention;
Fig. 13a shows the first pair of plastic infiltration units and the second pair of plastic infiltration units of Fig. 12, arranged according to an embodiment of the invention;
Fig. 13b shows a stack of first and second pairs of plastic infiltration units of Fig. 12 and 13a, according to an embodiment of the invention;
Fig. 13c shows the stack of pairs of plastic infiltration units of Fig. 13b being loaded for transporting, according to an embodiment of the invention;
Fig. 14a shows the first pair of plastic infiltration units of Figs. 6b, according to an embodiment of the invention;
Fig. 14b shows a plurality of pairs of plastic infiltration units of Fig. 6b and 14a, arranged adjacent to one another and stacked with respect to one another, according to an embodiment of the invention;
Fig. 14c shows the arrangement of plurality of pairs of plastic infiltration units of Fig. 14b being loaded for transporting, according to an embodiment of the invention,
Fig. 15 shows a cross-section of a pillar of a plastic infiltration unit according to an embodiment of the invention;
Fig. 16 shows a view of a portion of a pillar of a plastic infiltration unit according to an embodiment of the invention.

In the drawings and in the detailed description hereinbelow, like reference signs denote like features. The invention is exemplified in the embodiments described below. The invention is not limited to these embodiments.

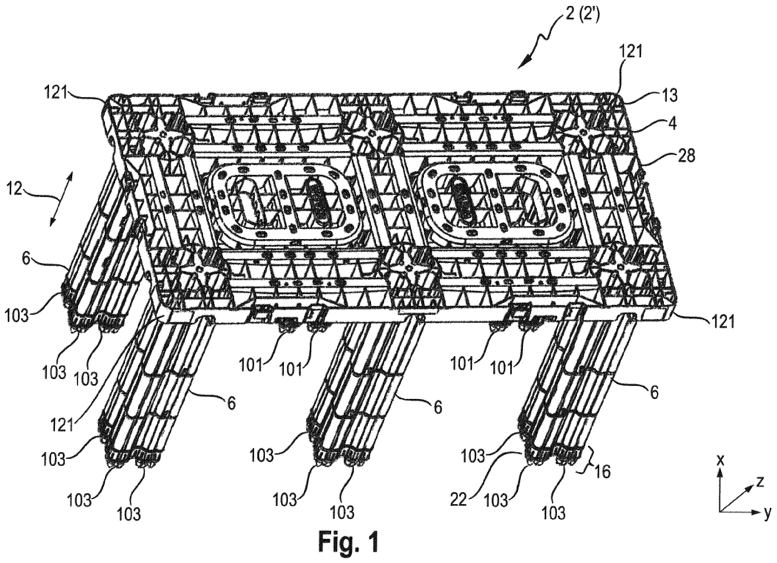

In this disclosure reference is made to a plastic infiltration unit 2, also referred to as a (first) plastic infiltration unit 2. Reference is also made to another plastic infiltration unit 2', also referred to as a (second) plastic infiltration unit 2'. In embodiments of the present invention, the another plastic infiltration unit is another identical plastic infiltration unit, that is the another plastic infiltration unit and the second plastic infiltration unit are identical to the plastic infiltration unit. Yet further plastic infiltration units, for example, third to nth plastic infiltration units may also be referred to. In these embodiments, the third to nth plastic infiltration units are identical to the first and second plastic infiltration units. According to embodiments of the invention, these plastic infiltration units (first to nth) may be connected and arranged in various ways, for example, in layers and/or stacked or temporarily coupled to one another for storage and/or transportational reasons. Unless otherwise stated, in the embodiments shown, the plastic infiltration units described and shown are constructed in the same way, so that in terms of the features described hereinbelow, the first to nth plastic infiltration units 2, 2' are the same. For example, in Figs. 1-5, a (first) plastic infiltration unit is shown. Its various features are identified. Figs. 1-5 also include a reference in brackets to another (second) plastic infiltration unit 2'. In this connection, the features of the another (second) plastic infiltration unit 2'correspond to those of the (first) plastic infiltration unit 2 and are, however, indicated in the remaining figures as having a prime ("*'*") to distinguish the another (second) plastic infiltration unit 2' from the (first) plastic infiltration unit 2.

In this disclosure, reference is further made to upper and lower surfaces, and undersides etc of the plastic infiltration unit. In this connection, this terminology refers to the general, relative orientation of the various features of the plastic infiltration unit when deployed. From this disclosure it will be seen that during storage and transportation, for example, the plastic infiltration units may be turned upside down (upended), inverted etc, so that they may couple with each other. The terminology is used, however, consistently, so that an underside of an inverted plastic infiltration unit is indeed located "above" an upper facing surface of the same inverted plastic infiltration unit.

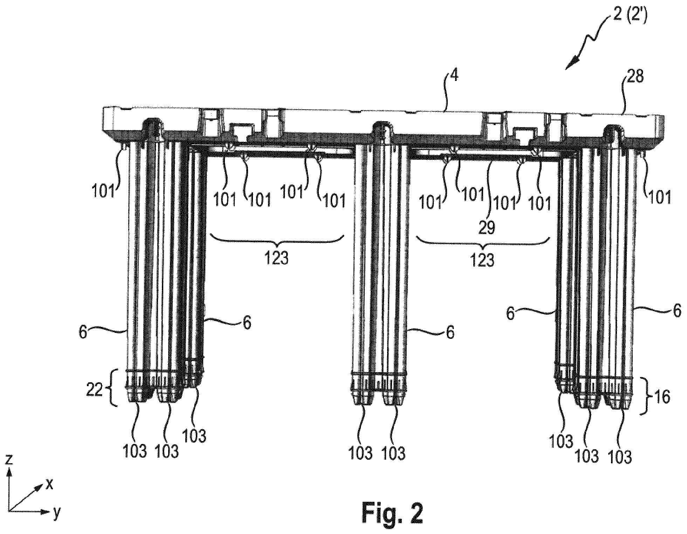

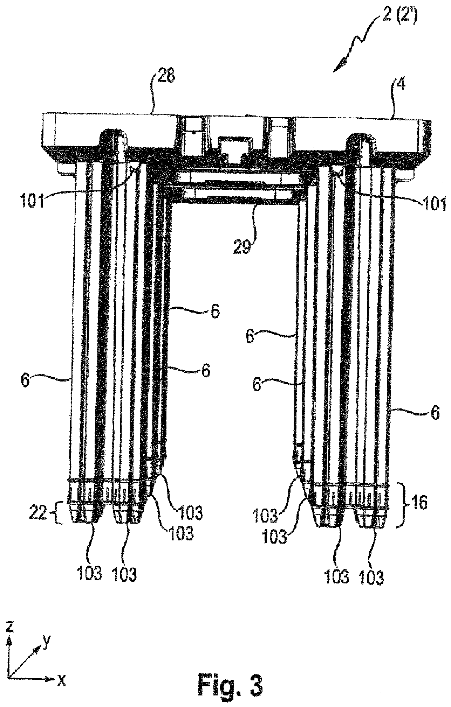

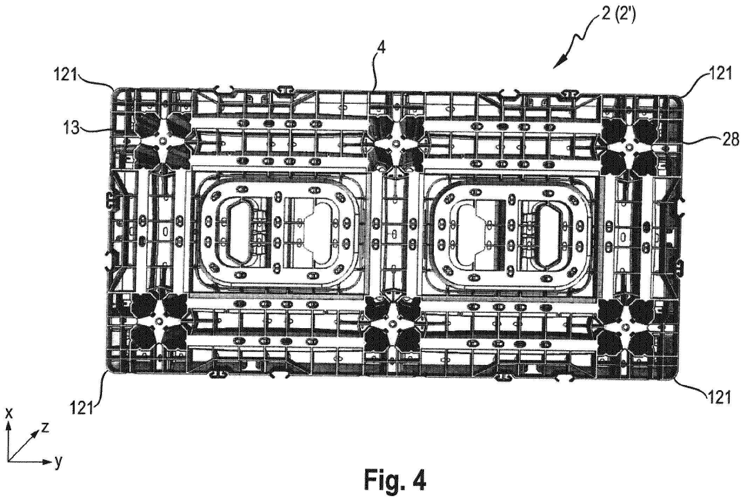

Fig. 1 shows a plastic infiltration unit according to an embodiment of the invention. Fig. 2 shows a side view (along the y direction) of a plastic infiltration unit according to an embodiment of the invention. Fig. 3 shows a side view (along the x direction) of a plastic infiltration unit according to an embodiment of the invention. Fig. 4 shows a top view (bird's eye view) of a plastic infiltration unit according to an embodiment of the invention. Fig. 5 shows an underside view of a plastic infiltration unit according to an embodiment of the invention. According to an embodiment of the invention, the plastic infiltration unit 2 comprises a top deck 4 and at least one pillar 6 extending from the top deck 4. The at least one pillar 6 supports the top deck 4. The plastic infiltration unit 2 is preferably weld free. For example, it is preferably made by injection molding from thermoplastic material. The plastic infiltration unit 2 according to the invention can be produced in a single shot. The top deck 4 and the at least one pillar 6 are thus produced in one piece. In this way, an efficient manufacturing process is achieved.

In the embodiment shown, the top deck 4 extends in a plane, for example, the xy plane shown in Fig. 1. The longitudinal direction 12 (or z direction) of the at least one pillar 6 is substantially perpendicular to the plane of the deck (the xy plane shown in Fig. 1).

The deck of a (first) infiltration unit provides a structure into which pillars of the (first) plastic infiltration unit extend from and into which pillars of another (second) plastic infiltration unit are insertable into. The pillars are provided to support a load. The load includes a load from surrounding plastic infiltration units and the load of any water. The load is transferred via the pillars also through the deck. In this specification, the deck of a plastic infiltration unit is referred to as a "top" deck. It is referred to as a top deck since the pillars of the same plastic infiltration unit extend from an underside of the deck. Therefore, when the plastic infiltration unit is deployed the deck is on the top of the pillars. The top deck of a first plastic infiltration unit, when deployed, however, may form the base for a second plastic infiltration unit disposed on top of (stacked on) the first plastic infiltration unit.

In this disclosure, reference is further made to upper and lower surfaces, and undersides etc of the plastic infiltration unit. As mentioned above, reference is also made to a top deck. In this connection, this terminology refers to the general, relative orientation of the various features of the plastic infiltration unit when deployed.

Further, the top deck may include an upper facing surface 28 (shown in Figs. 1-4, 6, 7) and an underside 29 having a lower facing surface 30 (shown in Figs. 2, 3, 5, 6, 7).

In one embodiment, the pillar 6 is integratably formed in the top deck 4 so that an upper end 14 (also referred herein as the proximal end) of the pillar 6 forms a part of the top deck 4 into which, for example, in use, a lower end 16 (also referred herein as the distal end) of a second pillar is insertable when deployed, for example.

In the embodiment shown in Fig.1, the unit 1 includes six pillars. Other numbers of pillars are envisaged, for example, two, three or four, or more.

In one embodiment, the plastic infiltration unit comprises a top deck 4 which extends in a plane, for example, the xy plane, shown in the Figures. The plastic infiltration unit further comprises at least one pillar 6 extending from the top deck for supporting the top deck 4. The top deck 4 has an underside 29. The at least one pillar 6 extends in a direction 12 from the top deck 4 for supporting the top deck 4. In particular, the at least one pillar 6 extends from the underside 29 of the top deck 4.

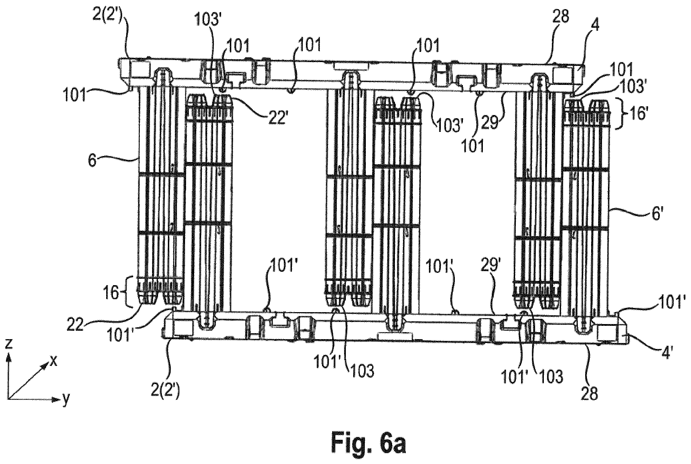

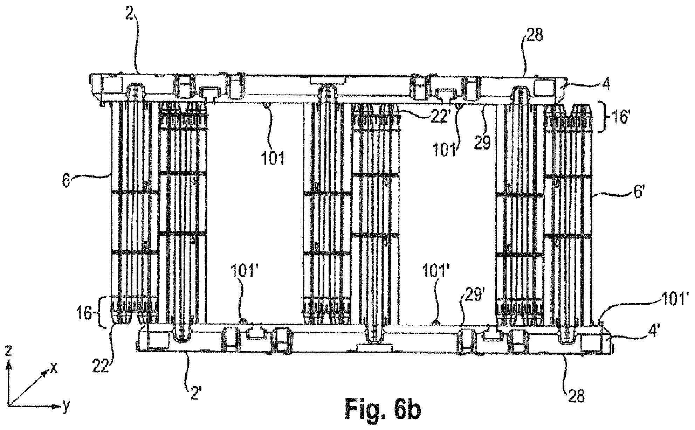

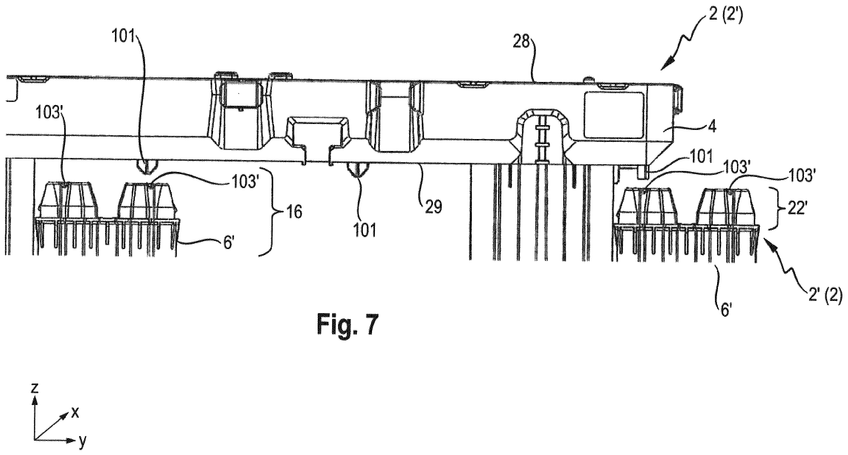

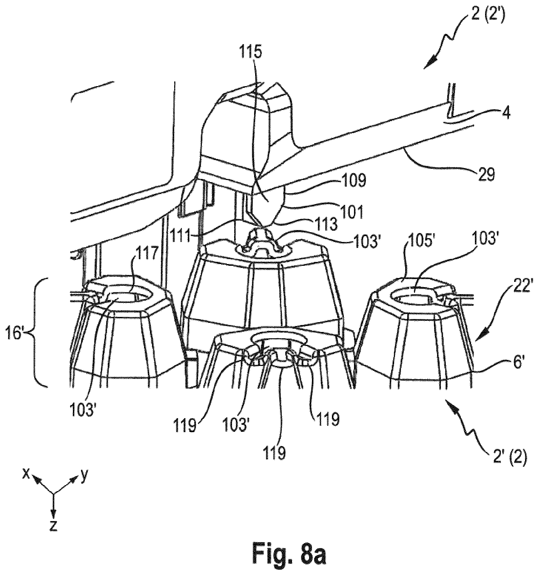

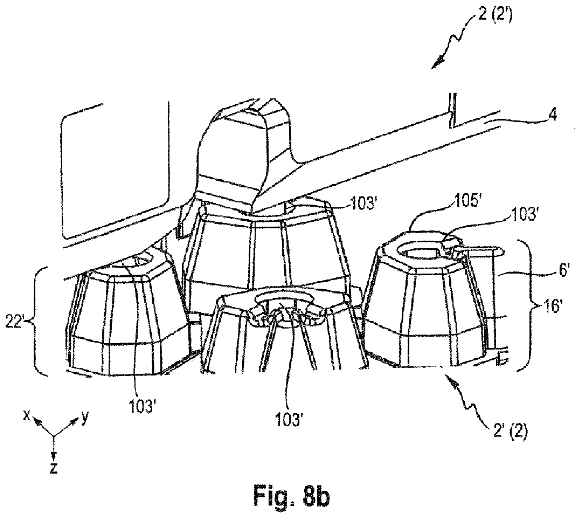

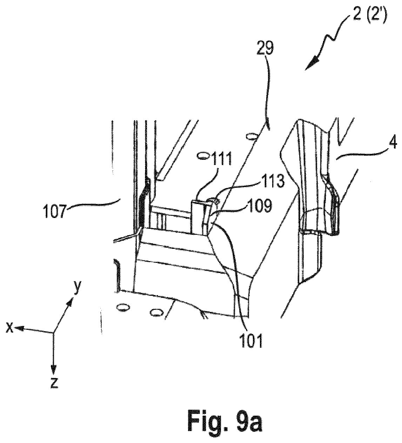

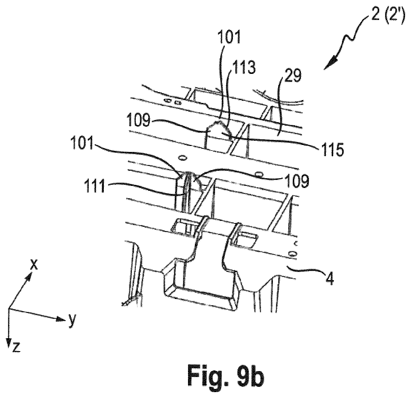

Fig. 6a shows a side view (along the y direction) of a plastic infiltration unit aligned with respect to another (second) plastic infiltration unit prior to the plastic infiltration unit and the another plastic infiltration unit becoming temporarily coupled, according to an embodiment of the invention. Fig 6b shows a side view (along the y direction) of the plastic infiltration unit and the another (second) plastic infiltration unit of Fig. 6a in a temporarily coupled arrangement, according to an embodiment of the invention. Fig. 7 shows a detail of Fig. 6a, in particular, Fig. 7 shows the at least one first integrated connector of the plastic infiltration unit in alignment with the at least one second integrated connector of the another plastic infiltration unit prior to becoming temporarily coupled, according to an embodiment of the invention. Fig. 8a shows a detail of Fig. 6a and Fig. 7, in particular, Fig. 8a shows a first integrated connector of the plastic infiltration unit in alignment with the second integrated connector of the another plastic infiltration unit prior to becoming temporarily coupled, according to an embodiment of the invention. Fig. 8b shows the detail of Fig. 8a in a temporarily coupled arrangement according to an embodiment of the invention. Fig. 9a shows a first integrated connector located in the vicinity of the periphery of the underside of the top deck according to an embodiment of the invention and Fig. 9b shows a pair of first integrated connectors located between the pillars of the plastic infiltration unit according to an embodiment of the invention.

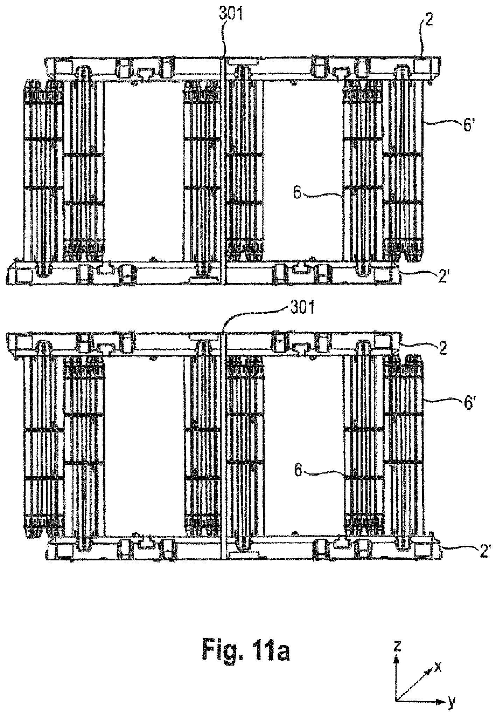

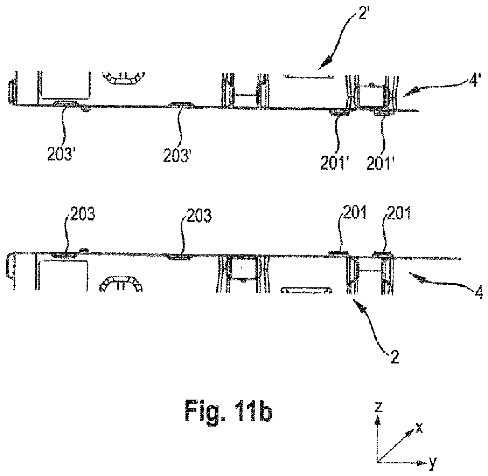

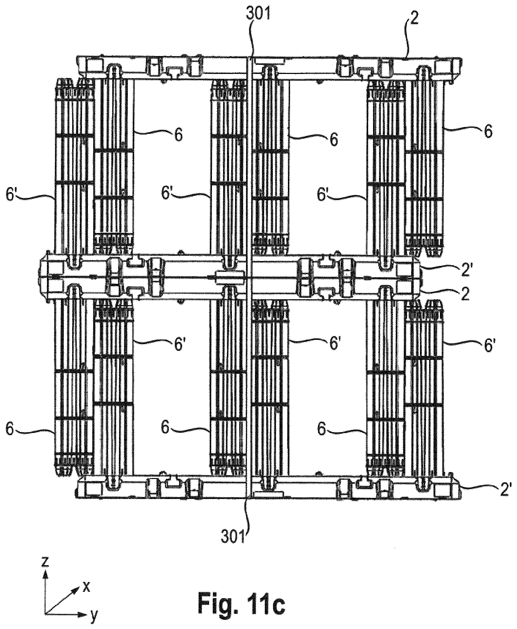

With reference to Figs. 1 to 9, the top deck comprises at least one first integrated connector 101 (Figs. 1-3, 5-9). The at least one pillar 6 comprises at least one second integrated connector 103 (Figs. 1-3, 5-8). The at least one first integrated connector 101 and the at least one second integrated connector 103 are provided for temporarily holding in position the (first) plastic infiltration unit 2 with another (second) plastic infiltration unit 2' (Figs. 6-8, see also Figs. 11-14 described in more detail hereinbelow). In one embodiment, the at least one first integrated connector 101 and the at least one second integrated connector 103 connect the (first) plastic infiltration unit 2 with another (second) plastic infiltration unit 2'. The another (second) plastic infiltration unit 2' comprises at least one another pillar 6. The at least one another pillar 6' comprises at least one another second integrated connector 103' (Figs. 6-8). The (first) plastic infiltration unit 6 and the another (second) plastic infiltration unit 6' are connectable. In a coupled arrangement, the at least one pillar 6' of the another (second) plastic infiltration unit 2' is held in position at the underside 29 of the top deck 4 of the (first) plastic infiltration unit 6 (Figs. 6b, 8b, 11a, 11c, 12-14). As mentioned above, Figs. 6a, 7 and 8a show the (first) plastic infiltration unit 6 and the another (second) plastic infiltration unit 6' aligned in such a manner that when brought into contact with each other, they will temporarily connect. Figs. 6b, 8b and 11-14 show the (first) plastic infiltration unit 6 and the another (second) plastic infiltration unit 6' in a temporarily connected arrangement. As depicted in Figs. 6b, 8b and 11-14, the at least one pillar 6' of the another plastic infiltration unit is temporarily connectable to the underside of the top deck of the plastic infiltration unit. In one embodiment, the connection between the (first) plastic infiltration unit 6 and the another (second) plastic infiltration unit 6' is formed by a connection of at least one of the at least one first integrated connector 101 with at least one another second integrated connector 103' and a connection of the at least one second connector 103 with the at least one another first integrated connector 101'. The integrated connectors are integrally formed in the structure of the plastic infiltration unit and the another (second) plastic the at least one first and second 101, 103 and at least one another first and second 101', 103' integrated connectors are integrally formed in the structure of the plastic infiltration unit. In the coupled arrangement the plastic infiltration unit and the another plastic infiltration unit are transportable. Various transportational, storage and arrangements for the plastic infiltration units when not deployed are shown and discussed hereinbelow with reference, in particular, to Figs. 11-14.

In one embodiment, the (first) plastic infiltration unit 2 comprises at least one second integrated connector 103 and the another (second) plastic infiltration unit 2' comprises at least one first integrated connector 101'. The at least one first and second integrated connectors 101, 103, 101', 103' are connectable, respectively, to one another, to temporarily connect the at least one pillar 6 of the plastic infiltration unit 2 to an underside 29' of the top deck of the another plastic infiltration unit 2'.

In a further embodiment, the at least one first integrated connector 101, 101' and the at least one second integrated connector 103, 103' is a male and a female connector, respectively. In particular, the male connector is arranged to be inserted into the female connector and the female connector is arranged to receive the male connector. In the embodiments shown, the first integrated connector 101, 101' is a male connector and the second integrated connector 103, 103' is a female connector. With reference, in particular, to Figs. 8a, 9a and 9b, in one embodiment, the at least one first integrated connector 101 (101') is a male connector comprising a pin 101 (101') extending from the underside 29 (29') of the top deck 4 (4'). Further, in one embodiment, the at least one second integrated connector 103, 103' is an at least one female connector comprising an opening 103, 103' provided in a distal end 16, 16' of the at least one pillar 6, 6'. Further, the at least one pillar 6, 6' comprises a foot 22, 22' having an underside 105', 105 (Figs. 8a and 8b) located at the distal end 16, 16' of the at least one pillar 6, 6', Further, the opening (103 (103') is provided in the underside 105' (105) of the foot 22, 22'.

In one embodiment, each of the at least one pillar 6, 6' is provided with a second integrated connector 103, 103'. In one embodiment, the plastic infiltration unit 2 and the another plastic infiltration unit 2' are both provided with at least one first and at least one second integrated connector (101, 101', 103, 103').

The at least one first integrated connector 101, 101' and the at least one second integrated connector 103, 103' are located at complementary locations on the (first) plastic infiltration unit 2 and the another (second) plastic infiltration unit 2', respectively, so that when one of the plastic infiltration units 2, 2' is inverted with respect to the other plastic infiltration units 2', 2, at least one of the first integrated connectors 101, 101' connects with at least one of the second integrated connectors 103, 103' on the other plastic infiltration unit 2, 2' and vice versa. In one embodiment, a plurality of first and second integrated connectors 103, 1β3', 105, 105' are provided. In particular, there is redundancy of first and second integrated connectors 103, 103', 105, 105', provided at complementary locations, however, so that at least one first integrated connector 101, 101' of one plastic infiltration unit connects with a second integrated connector 103, 103' of the another inverted plastic infiltration unit 2, 2'. In this way, connection between the plastic infiltration units is achieved without having to orient or align the plastic infiltration units beyond inverting one of the units and bringing the plastic infiltration units towards each other with the pillars offset with respect to one another to allow at least one of the pillars of one unit to connect with the underside of the top deck of the other unit. In this way, the time required to prepare the units for transportation or storage is reduced. In a preferred embodiment, the units are arranged so that as many as possible of the pillars of the one unit are connected with the underside of the top deck of the other unit. In this way, the connection is made stronger between the units. Further, the space occupied by the two units in total is reduced. In one further embodiment, the underside 29, 29' of the top deck 4, 4' comprises an outer perimeter region 107 (Fig. 9a) in which at least one first integrated connector 101 is located.

Fig. 15 shows a cross-section of a pillar of a plastic infiltration unit according to an embodiment of the invention and Fig. 16 shows a view of a portion of a pillar of a plastic infiltration unit according to an embodiment of the invention.

In one embodiment, the at least one pillar 6, 6' extends in a longitudinal direction 12 (z direction) and has a longitudinal axis (z axis). The at least one pillar 6, 6' includes a central compartment 8 extending along the longitudinal axis (z axis) and at least one additional compartment 10 extending in the longitudinal direction. The at least one additional compartment 10 may surround at least a part of the central compartment 8. Further, the at least one second integrated connector 103, 103' is provided in the at least one additional compartment 10 (Figs. 8a and 8b).

The at least one integrated male connector 101, 101 comprises a pin. The pin may comprise a first plate portion 109 and a second plate portion 111 (Fig. 9a and 9b). The first and second plate portions 109, 111 may have a distal end 113 (Fig. 8a, 9a, 9b). The first plate portion 109 may have a central region 115 extending in a direction of insertion of the pin (Figs. 8a, 9b). Further, the first and second plate portions 109, 111 may taper towards the distal end 113. Further, the second plate portion 111 may extend from the central region 115. Further, the first and second plate portions 109, 111 are integrally formed. In one embodiment, the second plate portion 111 extends perpendicularly from the first plate portion 109. In one embodiment, the at least one integrated male connector 101, 101' has a "T"shaped crosssection.

The at least one integrated female connector 103, 103' comprises a recess 103, 103' formed in an underside 105, 105' surface of the at least one pillar 6, 6'. The recess 103, 103' may have an at least in part circular crosssection 117 (Fig. 8a). The recess 103, 103 may further comprise a plurality of notches 119 (Fig. 8a) extending away from the circular part 117 of the recess 103, 103'. In the embodiment shown in Fig. 8a, three notches are provided. In this way, a T-shaped male connector can be readily accommodated in the female connector in three orientations.

In one embodiment, the plastic infiltration unit 2 and the another plastic infiltration unit 2' may comprise an even number of at least four pillars 6, 6'. Further, the top deck 4, 4' of the plastic infiltration unit and the another plastic infiltration unit extend in a plane and have a quadrilateral shape (Figs. 1-5). The top deck 4, 4' may have a peripheral region 13 (Figs. 1, 4 and 5) extending around the periphery of the top deck 4, 4' and four corners 121 (Figs. 1 and 4). The at least four pillars 121 are arranged in one embodiment towards the corners 121 of the top deck 4, 4'. Further, a plurality of first integrated connectors 101, 101' are disposed on the underside 29 of the top deck 4, 4', respectively. Further, a plurality of second integrated connectors 101, 103' are disposed on the at least four pillars 6, 6', respectively. Further, on the underside 29 of the top deck 4, 4' in a region 123 defined between the pillars (Fig. 2), the plurality of first integrated connectors 101, 101' may be are disposed in pairs. Further, in the peripheral region 13, the plurality of first integrated connectors 101, 101' may be disposed singly. In this way, when the plastic infiltration unit 2 is brought into contact with an upturned another plastic infiltration unit 2', the pillars 6 of the plastic infiltration unit 2 engage with the first integrated connectors 101' of the another plastic infiltration unit 2' and the pillars 6' of the another plastic infiltration unit 2' engage with the first integrated connectors 101 of the plastic infiltration unit 2 (Figs. 6a, 6b, 7, 8a, 8b, 11a, 11c). In one preferred embodiment, the plastic infiltration unit 2 and the another plastic infiltration unit 2' comprise six pillars 6, 6' and twenty first integrated connectors. Further each pillar may comprise four second integrated connectors. Therefore, a unit comprising six pillars 6, 6 comprises twenty four second integrated connectors 103, 103'.

As mentioned above, the plastic infiltration unit 2 and the another identical plastic infiltration unit 2' have the same construction. In particular, the top deck 4, 4' may be a quadrilateral construction extending in a first direction (y) and a second direction (x), and having a thickness extending in a third direction (z). In one embodiment, the three directions (x, y and z directions) are orthogonal with respect to each other.

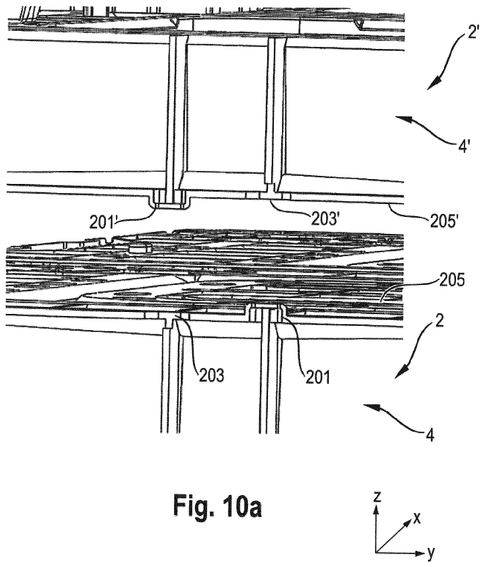

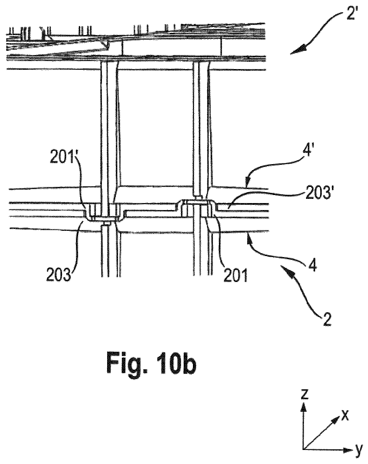

Fig. 10a shows a projection and a recess formed in the top deck of a plastic infiltration unit and an another (second) upended plastic infiltration unit, prior to the upper surface of the plastic infiltration unit coming into contact with the upended upper surface of the another plastic infiltration unit, according to an embodiment of the invention and Fig. 10b shows the plastic infiltration unit and another plastic infiltration unit of Fig. 10a when the upper surface of the plastic infiltration unit is brought into contact with the upended upper surface of the another plastic infiltration unit, according to an embodiment of the invention.

In a yet further embodiment as depicted in Figs. 10a and 10b, and further depicted in Fig. 11b, the plastic infiltration unit and the another plastic infiltration unit may further comprise at least one projection 201, 201' and at least one recess 203, 203' for receiving the projection 201, 201'. The at least one projection 201, 201' and the at least one recess 203, 203' may be disposed on an upper surface 205, 205' of the top deck 4, 4'. In this way, when the upper surface 205, 205' of the top deck 4, 4' is brought into contact with the upper surface 205, 205' of an upturned top deck 4' of the another plastic infiltration unit 2', the at least one projection 201 on the plastic infiltration unit 2 is received by the at least one recess 203' of the another plastic infiltration unit 2, or vice versa. In this way, a sliding motion between the top deck of plastic infiltration unit and the top deck of the another plastic infiltration unit is prevented.

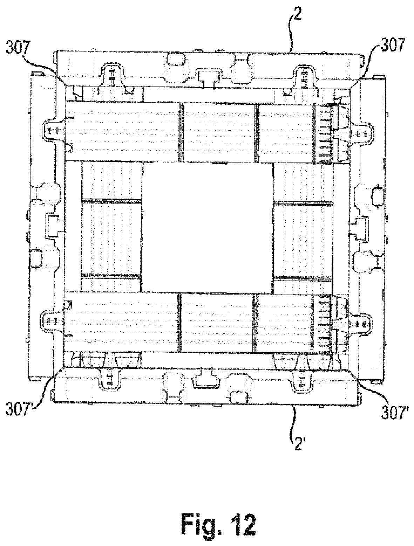

In a further embodiment, the underside 29 of the top deck 4 may comprise a chamfered edge 307 (Fig. 12) which is arranged to cooperate with a chamfered edge 307' of another plastic infiltration unit 2'.

According to one embodiment of the present invention, there is provided a plurality of plastic infiltration units comprising a plastic infiltration unit 2 and at least one another (second) plastic unit 2'.

The plurality of plastic infiltration units are temporarily coupled to one another for transporting or storage purposes. As mentioned above, various transporting and storage arrangements are shown in Figs.11-14. In one embodiment, the plurality of plastic infiltration units comprises a first pair of plastic infiltration units temporarily coupled to one another, wherein the top deck of a first plastic infiltration unit is temporarily coupled to the at least one pillar of a second plastic infiltration unit, the plurality of plastic infiltration units further comprising a second pair of plastic infiltration units temporarily coupled to one another wherein the top deck of a third plastic infiltration unit is temporarily coupled to the at least one pillar of a fourth plastic infiltration unit. In one embodiment (Figs. 11c, 13c and 14) the first pair of plastic infiltration units is stacked on the second pair of plastic infiltration units.

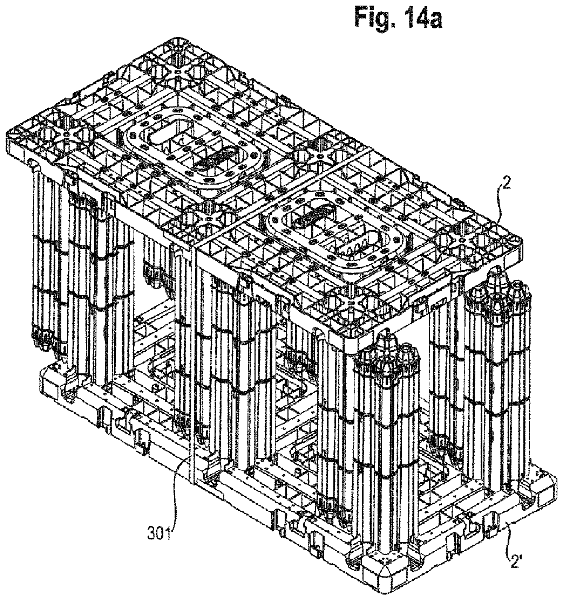

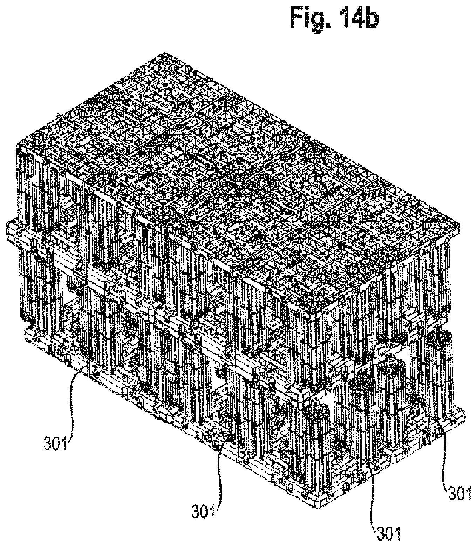

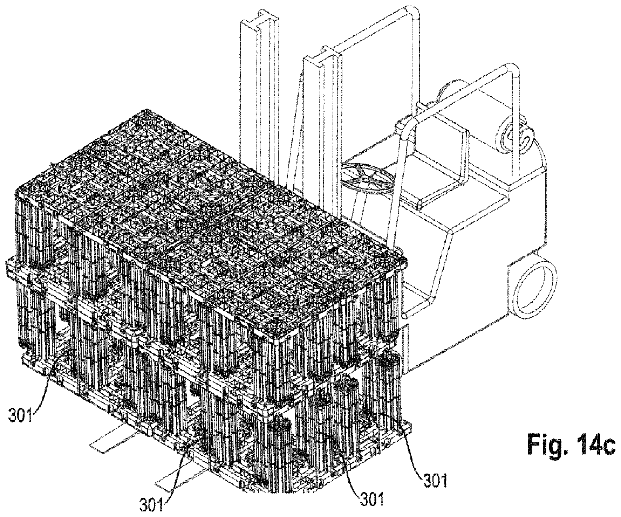

In a yet further embodiment depicted in Figs. 14b and 14c, a third and a fourth pair of plastic infiltration units coupled and stacked in the same manner as the first and second pair of plastic infiltration units, and arranged adjacent to the first and second pair of plastic infiltration units.

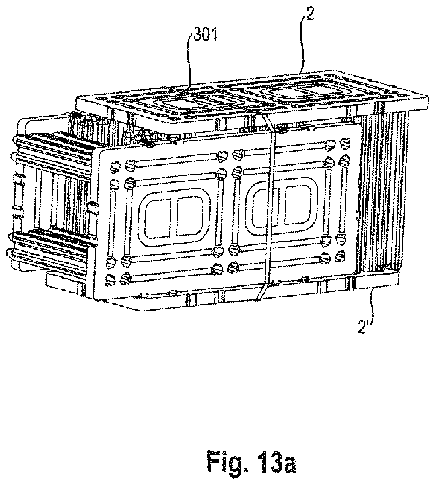

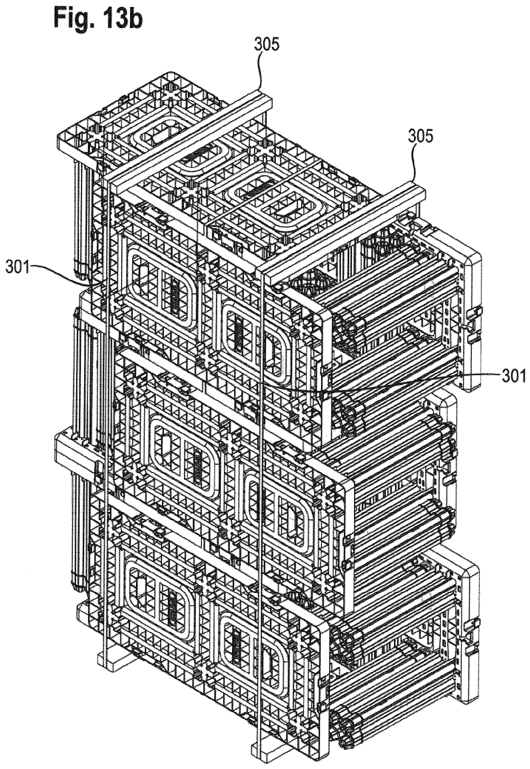

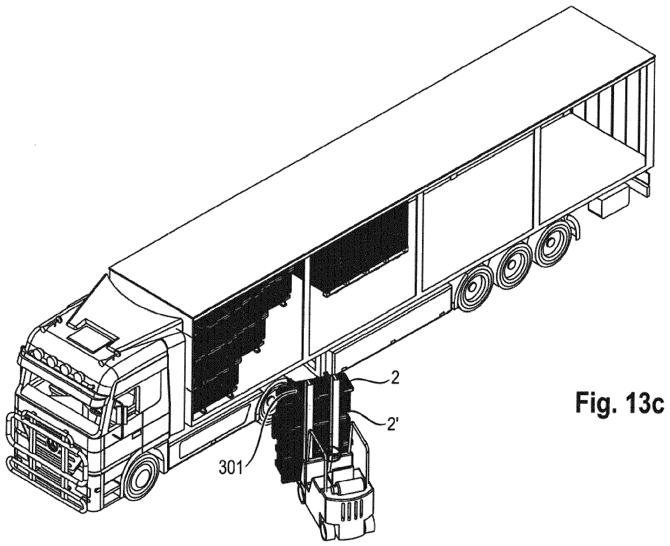

In a yet further embodiment, as depicted in Figs. 12 and 13a, 13b and 13c, the second pair of plastic infiltration units is arranged so that the at least one pillar of the fourth plastic infiltration unit is arranged to be located in a space between the top decks of the first and second plastic infiltration unit.

In a yet further embodiment, a third and fourth pair of plastic infiltration units coupled in the same manner as the first and second pair of plastic infiltration units, and arranged adjacent to the first and second pair of plastic infiltration units (Figs 14b, 14c).

In particular, the plurality of plastic infiltration units may be strapped together using strapping bands 301 (Figs. 11a, 11c, 13a, 13b, 14b, 14c). Further, the plurality of plastic infiltration units may be strapped together using at least one wooden beam 305 (Fig. 13b). Alternative bundling techniques may also be envisaged.

According to a further aspect of the present disclosure, there is provided a plastic infiltration unit comprising: a top deck which extends in a plane, the top deck having an upper surface, wherein the top deck comprises: at least one projection and at least one recess for receiving the projection, the at least one projection and the at least one recess being disposed on an upper surface of the top deck, so that when the upper surface of the top deck is brought into contact with the upper surface of an upturned top deck of another (second) plastic infiltration unit, the at least one projection on the plastic infiltration unit is received by the at least one recess of the another plastic infiltration unit, or vice versa, to prevent a sliding motion between the top deck of plastic infiltration unit and the top deck of the another plastic infiltration unit.

The plastic infiltration units of the present invention may be arranged as an assembly.

According to an embodiment of the invention, there is provided an assembly of two, or more plastic infiltration units.

In one embodiment, the assembly comprises at least two plastic infiltration units, including a first plastic infiltration unit and a second plastic infiltration unit. Each plastic infiltration unit comprises a top deck which extends in a plane, the top deck having an underside, at least one pillar extending in a direction from the top deck for supporting the top deck. The top deck comprises at least one first integrated connector and the at least one pillar comprises at least one second integrated connector, to temporarily connect the first plastic infiltration unit with the second plastic infiltration unit. Each of the at least two plastic infiltration units comprises at least one pillar, the at least one pillar comprising at least one another second integrated connector, wherein the at least two plastic infiltration units are connectable, so that in a coupled arrangement, the at least one pillar of the second plastic infiltration unit is held in position at the underside of the top deck of the first plastic infiltration unit. Preferably, the assembly comprises a plurality of pairs of plastic infiltration units arranged to temporarily connect with each other. However, the assembly may also include an odd number of plastic infiltration units, whereby pairs of plastic infiltration units are coupled with one another and the odd plastic infiltration unit is disposed, for example, between the pillars of a coupled pair.

According to a yet further aspect of the present disclosure, there is provided a method of manufacturing a plurality of plastic infiltration units comprising the steps of: producing a plastic infiltration unit with another plastic infiltration unit, using a molding process and coupling the plastic infiltration unit and the another plastic infiltration unit when the plastic infiltration unit and the another plastic infiltration unit are still warm from molding process. In this way, the units are maintained in an optimum orientation whilst they cool. In this way, yet further, the accuracy of the production of the units is improved.

The arrangements of plastic infiltration units are not limited to those shown in the Figures.

It is of course clear that the expression "produced in one piece" is to be understood as embracing or alternatively formulated as the following expressions, and that the following expressions may be interchangeable with the expression "produced in one piece": that the top deck and the at least one pillar are at least one of monolithic, uniform and/or integral, alternatively, that the infiltration unit is free from at least one of joins, seams, and/or interfaces, further alternatively, that the material of the top deck and the material of the pillar are continuous, yet further alternatively, that the top deck and the pillar are integrally connected, and yet further alternatively, that the top deck and the pillar are free from at least one of joins, seams, and/or interfaces.

The invention is not limited to the embodiments shown and described above.

## Claims

1. A plastic infiltration unit (2) comprising:
a top deck (4) which extends in a plane, the top deck (4) having an underside (29),
at least one pillar (6) extending in a direction from the top deck (4) for supporting the top deck, wherein the top deck comprises at least one first integrated connector (101) and the at least one pillar (6) comprises at least one second integrated connector (103), for temporarily holding in position the plastic infiltration unit with another identical plastic infiltration unit (2') comprising at least one other pillar (6'), the at least one other pillar (6') comprising at least one other second integrated connector (103'), wherein the plastic infiltration unit (2) and the other plastic infiltration unit (2') are connectable , so that in a coupled arrangement, the at least one pillar (6') of the other identical plastic infiltration unit (2') is held in position at the underside of the top deck (4) of the plastic infiltration unit (2), **characterised in that**: the at least one first integrated connector (101) is a male connector comprising a pin extending from the underside of the top deck (4), **in that**: the at least one second integrated connector (103) is an at least one female connector comprising an opening provided in a distal end of the at least one pillar (6), and **in that**: the at least one pillar (6) comprises a foot (22) having an underside located at the distal end of the at least one pillar, and the opening is provided in the underside of the foot (22), so that the pin (101) and the opening (103) in the underside of the foot (22) temporarily connect, in use, the plastic infiltration unit (2) with said other identical plastic infiltration unit (2'), so that the at least one pillar (6') of the other plastic infiltration unit (2') is temporarily connectable to the underside of the top deck (4) of the plastic infiltration unit (2).

2. A plastic infiltration unit according to any preceding claim, wherein the connection between the plastic infiltration unit and the other identical plastic infiltration unit is formed by at least one of a connection of the at least one first integrated connector (101) with at least one other identical second integrated connector (103') and a connection of the at least one second connector (103) with at least one other identical first integrated connector (101').

3. A plastic infiltration unit according to any preceding claim, wherein the at least one first and second and at least one other first and second integrated connectors (101, 101', 103, 103') are integrally formed in the structure of the plastic infiltration unit.

4. A plastic infiltration unit according to any preceding claim, wherein the underside of the top deck (4) comprises an outer perimeter region (107) in which the at least one first integrated connector (101) is located.

5. A plastic infiltration unit according to any preceding claim, wherein the at least one pillar (6) extends in a longitudinal direction and has a longitudinal axis, wherein the at least one pillar (6) includes a central compartment (8) extending along the longitudinal axis and at least one additional compartment (10) extending in the longitudinal direction, wherein the at least one additional compartment (10) surrounds at least a part of the central compartment (8), and wherein the at least one second integrated connector (103) is provided in the at least one additional compartment (10).

6. A plastic infiltration unit according to any preceding claim, wherein the pin (101) comprises a first plate portion (109) and a second plate portion (111), the first and second plate portions (109, 111) having a distal end, the first plate portion (109) having a central region extending in a direction of insertion of the pin (101), wherein the first and second plate portions (109, 111) taper towards the distal end, wherein the second plate portion (111) extends from the central region, and wherein the first and second plate portions (109, 111) are integrally formed, and/or
wherein the at least one integrated male connector (101) has a "T"shaped crosssection, and/or
wherein the at least one integrated female connector (103) comprises a recess (103) formed in an underside surface of the at least one pillar (6), the recess having an at least in part circular crosssection, wherein the recess (103) further comprises a plurality of notches extending away from the circular part of the recess.

7. A plastic infiltration unit and another identical plastic infiltration unit according to any preceding claim, wherein the plastic infiltration, unit and the other identical plastic infiltration unit comprise an even number of at least four pillars (6), and wherein the top deck of the plastic infiltration unit and the other plastic infiltration unit extend in a plane and have a quadrilateral shape, the top deck (4) having a peripheral region extending around the periphery of the top deck and four corners, wherein the at least four pillars are arranged towards the corners of the top deck, wherein a plurality of first integrated connectors (101) are disposed on the underside of the top decks , respectively, and a plurality of second integrated connectors (103) are disposed on the at least four pillars, respectively, wherein on the underside of the top deck in a region defined between the pillars, the plurality of first integrated connectors (101) are disposed in pairs and in the peripheral region, the plurality of first integrated connectors (101) are disposed singly, so that when the plastic infiltration unit is brought into contact with an upturned other plastic infiltration unit, the pillars of the plastic infiltration unit engage with the first integrated connectors (103') of the other plastic infiltration unit and the pillars of the other plastic infiltration unit engage with the first integrated connectors (101) of the plastic infiltration unit.

8. A plastic infiltration unit according to any preceding claim, wherein the plastic infiltration unit and the other identical plastic infiltration unit comprise six pillars and twenty first integrated connectors, and/or wherein the plastic infiltration unit and the other identical plastic infiltration unit have the same construction, and/or
wherein the top deck (4) is a quadrilateral construction extending in a first direction (y) and a second direction (x), and having a thickness extending in a third direction (z).

9. A plastic infiltration unit according to any preceding claim, wherein the top deck (4) extends in a plane and a longitudinal direction of the at least one pillar is substantially perpendicular to the plane of the top deck.

10. A plastic infiltration unit according to any preceding claim, further comprising at least one projection (201) and at least one recess (203) for receiving the projection, the at least one projection (201) and the at least one recess (203) being disposed on an upper surface of the top deck, so that when the upper surface of the top deck is brought into contact with the upper surface of an upturned top deck of the other plastic infiltration unit, the at least one projection (201) on the plastic infiltration unit is received by the at least one recess of the other plastic infiltration unit, or vice versa, to prevent a sliding motion between the top deck (4) of plastic infiltration unit and the top deck of the other plastic infiltration unit.

11. A plastic infiltration unit according to any preceding claim, wherein the underside of the top deck (4) comprising a chamfered edge (307) which is arranged to cooperate with a chamfered edge (307') of another plastic infiltration unit.

12. A plurality of plastic infiltration units according to any preceding claim, wherein the plurality of plastic infiltration units are temporarily coupled to one another for transporting or storage purposes, the plurality of plastic infiltration units comprises a first pair of plastic infiltration units temporarily coupled, to one another, wherein the top deck of a first plastic infiltration unit is temporarily coupled to the at least one pillar of a second plastic infiltration unit, the plurality of plastic infiltration units further comprising a second pair of plastic infiltration units temporarily coupled to one another wherein the top deck of a third plastic infiltration unit is temporarily coupled to the at least one pillar of a fourth plastic infiltration unit.

13. A plurality of plastic infiltration units according to claim 12, wherein the first pair of plastic infiltration units is stacked on the second pair of plastic infiltration units, and/or
further comprising a third and a fourth pair of plastic infiltration units coupled and stacked in the same manner as the first and second pair of plastic infiltration units, and arranged adjacent to the first and second pair of plastic infiltration units, and
wherein the second pair of plastic infiltration units is arranged so that the at least one pillar (6) of the fourth plastic infiltration unit is arranged to be located in a space between the top decks of the first and second plastic infiltration unit, and/or
further comprising a third and fourth pair of plastic infiltration units coupled in the same manner as the first and second pair of plastic infiltration units , and arranged adjacent to the first and second pair of plastic infiltration units.

14. A plurality of plastic infiltration units according to claim 12 or 13, wherein the plurality of plastic infiltration units are strapped together using strapping bands, and/or wherein the plurality of plastic infiltration units are strapped together using at least one wooden beam.

## Patentansprüche

1. Kunststoffversickerungseinheit (2), umfassend:
ein Oberdeck (4), das sich in einer Ebene erstreckt, wobei das Oberdeck (4) eine Unterseite (29) aufweist,
mindestens eine Säule (6), die sich in einer Richtung von dem Oberdeck (4) erstreckt, um das Oberdeck zu stützen, wobei das Oberdeck mindestens einen ersten integrierten Verbinder (101) umfasst und die mindestens eine Säule (6) mindestens einen zweiten integrierten Verbinder (103) umfasst, zum temporären In-Position-Halten der Kunststoffversickerungseinheit mit einer anderen identischen Kunststoffversickerungseinheit (2'), umfassend mindestens eine andere Säule (6'), wobei die mindestens eine andere Säule (6') mindestens einen anderen zweiten integrierten Verbinder (103') umfasst,
wobei die Kunststoffversickerungseinheit (2) und die andere Kunststoffversickerungseinheit (2') verbindbar sind, sodass, in einer gekoppelten Anordnung, die mindestens eine Säule (6') der anderen identischen Kunststoffversickerungseinheit (2') an der Unterseite des Oberdecks (4) der Kunststoffversickerungseinheit (2) in Position gehalten wird,
**dadurch gekennzeichnet, dass**: der mindestens eine erste integrierte Verbinder (101) ein männlicher Verbinder ist, der einen Stift umfasst, der sich von der Unterseite des Oberdecks (4) erstreckt, dadurch dass: der mindestens eine zweite integrierte Verbinder (103) mindestens ein weiblicher Verbinder ist, der eine Öffnung umfasst, die an einem distalen Ende der mindestens einen Säule (6) bereitgestellt ist, und dadurch dass: die mindestens eine Säule (6) einen Fuß (22) umfasst, der eine Unterseite aufweist, die sich an dem distalen Ende der mindestens einen Säule befindet, und wobei die Öffnung in der Unterseite des Fußes (22) bereitgestellt ist,
sodass der Stift (101) und die Öffnung (103) in der Unterseite des Fußes (22) temporär, bei Verwendung, die Kunststoffversickerungseinheit (2) mit der anderen identischen Kunststoffversickerungseinheit (2') verbinden, sodass die mindestens eine Säule (6') der anderen Kunststoffversickerungseinheit (2') temporär mit der Unterseite des Oberdecks (4) der Kunststoffversickerungseinheit (2) verbindbar ist.

2. Kunststoffversickerungseinheit nach einem der vorstehenden Ansprüche, wobei die Verbindung zwischen der Kunststoffversickerungseinheit und der anderen identischen Kunststoffversickerungseinheit mittels mindestens einem aus einer Verbindung des mindestens einen ersten integrierten Verbinders (101) mit mindestens einem anderen identischen zweiten integrierten Verbinder (103') und einer Verbindung des mindestens einen zweiten Verbinders (103) mit mindestens einem anderen identischen ersten integrierten Verbinder (101') gebildet ist.

3. Kunststoffversickerungseinheit nach einem der vorstehenden Ansprüche, wobei die mindestens einen ersten und zweiten und mindestens einen anderen ersten und zweiten integrierten Verbinder (101, 101', 103, 103') integral in der Struktur der Kunststoffversickerungseinheit gebildet sind.

4. Kunststoffversickerungseinheit nach einem der vorstehenden Ansprüche, wobei die Unterseite des Oberdecks (4) einen äußeren Umfangsbereich (107) umfasst, in dem sich der mindestens eine erste integrierte Verbinder (101) befindet.

5. Kunststoffversickerungseinheit nach einem der vorstehenden Ansprüche, wobei die mindestens eine Säule (6) sich in eine Längsrichtung erstreckt und eine Längsachse aufweist, wobei die mindestens eine Säule (6) ein Mittelfach (8) einschließt, das sich entlang der Längsachse erstreckt und mindestens ein zusätzliches Fach (10), das sich in der Längsrichtung erstreckt, wobei das mindestens eine zusätzliche Fach (10) mindestens einen Teil des Mittelfachs (8) umgibt, und wobei der mindestens eine zweite integrierte Verbinder (103) in dem mindestens einen zusätzlichen Fach (10) bereitgestellt ist.

6. Kunststoffversickerungseinheit nach einem der vorstehenden Ansprüche, wobei der Stift (101) einen ersten Plattenabschnitt (109) umfasst und einen zweiten Plattenabschnitt (111), wobei die ersten und zweiten Plattenabschnitte (109, 111) ein distales Ende aufweisen, wobei der erste Plattenabschnitt (109) einen Mittelbereich aufweist, der sich in einer Richtung der Einfügung des Stifts (101) erstreckt, wobei die ersten und zweiten Plattenabschnitte (109, 111) sich in Richtung des distalen Endes verjüngen, wobei der zweite Plattenabschnitt (111) sich von dem Mittelbereich erstreckt, und wobei die ersten und zweiten Plattenabschnitte (109, 111) integral gebildet sind, und/oder
wobei der mindestens eine integrierte männliche Verbinder (101) einen "T"-förmigen Querschnitt aufweist, und/oder
wobei der mindestens eine integrierte weibliche Verbinder (103) eine Aussparung (103) umfasst, die in einer Unterseitenoberfläche der mindestens einen Säule (6) gebildet ist, wobei die Aussparung einen mindestens zum Teil kreisförmigen Querschnitt aufweist, wobei die Aussparung (103) weiter eine Vielzahl von Kerben umfasst, die sich von dem kreisförmigen Teil der Aussparung weg erstrecken.

7. Kunststoffversickerungseinheit und eine andere identische Kunststoffversickerungseinheit nach einem der vorstehenden Ansprüche, wobei die Kunststoffversickerungseinheit und die andere identische Kunststoffversickerungseinheit eine gerade Anzahl von mindestens vier Säulen (6) umfasst, und wobei sich das Oberdeck der Kunststoffversickerungseinheit und die andere Kunststoffversickerungseinheit in einer Ebene erstrecken und eine vierseitige Form aufweisen, wobei das Oberdeck (4) einen Umfangsbereich aufweist, der sich um den Umfang des Oberdecks und vier Ecken erstreckt, wobei die mindestens vier Säulen in Richtung der Ecken des Oberdecks eingerichtet sind, wobei die Vielzahl der ersten integrierten Verbinder (101) an der Unterseite der Oberdecks entsprechend angeordnet sind, und eine Vielzahl von zweiten integrierten Verbindern (103) auf den mindestens vier Säulen entsprechend angeordnet sind, wobei die Unterseite des Oberdecks in einem Bereich zwischen den Säulen definiert ist, wobei die Vielzahl von ersten integrierten Verbindern (101) in Paaren und in dem Umfangsbereich angeordnet sind, wobei die Vielzahl von ersten integrierten Verbindern (101) einzeln angeordnet sind, sodass, wenn die Kunststoffversickerungseinheit mit einer umgedrehten anderen Kunststoffversickerungseinheit in Kontakt gebracht wird, die Säulen der Kunststoffversickerungseinheit mit den ersten integrierten Verbindern (103') der anderen Kunststoffversickerungseinheit in Eingriff kommen und die Säulen der anderen Kunststoffversickerungseinheit mit den ersten integrierten Verbindern (101) der Kunststoffversickerungseinheit in Eingriff kommen.

8. Kunststoffversickerungseinheit nach einem der vorstehenden Ansprüche, wobei die Kunststoffversickerungseinheit und die andere identische Kunststoffversickerungseinheit sechs Säulen und zwanzig erste integrierte Verbinder umfassen, und/oder
wobei die Kunststoffversickerungseinheit und die andere identische Kunststoffversickerungseinheit dieselbe Konstruktion aufweisen, und/oder
wobei das Oberdeck (4) eine viereckige Konstruktion ist, die sich in einer ersten Richtung (y) und einer zweiten Richtung (x) erstreckt und die eine Dicke aufweist, die sich in einer dritten Richtung (z) erstreckt.

9. Kunststoffversickerungseinheit nach einem der vorstehenden Ansprüche, wobei das Oberdeck (4) sich in einer Ebene erstreckt und eine Längsrichtung der mindestens einen Säule im Wesentlichen senkrecht zu der Ebene des Oberdecks verläuft.

10. Kunststoffversickerungseinheit nach einem der vorstehenden Ansprüche, weiter umfassend mindestens einen Vorsprung (201) und mindestens eine Aussparung (203) zur Aufnahme des Vorsprungs, wobei der mindestens ein Vorsprung (201) und die mindestens eine Aussparung (203) auf einer oberen Oberfläche des Oberdecks angeordnet sind, sodass, wenn die obere Oberfläche des Oberdecks mit der oberen Oberfläche eines umgedrehten Oberdecks der anderen Kunststoffversickerungseinheit in Kontakt gebracht wird, der mindestens eine Vorsprung (201) auf der Kunststoffversickerungseinheit von der mindestens einen Aussparung der anderen Kunststoffversickerungseinheit aufgenommen wird, oder umgekehrt, um eine gleitende Bewegung zwischen dem Oberdeck (4) der Kunststoffversickerungseinheit und dem Oberdeck der anderen Kunststoffversickerungseinheit zu verhindern.

11. Kunststoffversickerungseinheit nach einem der vorstehenden Ansprüche, wobei die Unterseite des Oberdecks (4) eine abgeschrägte Kante (307) umfasst, die eingerichtet ist, um mit einer abgeschrägten Kante (307') einer anderen Kunststoffversickerungseinheit zusammenzuwirken.

12. Vielzahl von Kunststoffversickerungseinheiten nach einem der vorstehenden Ansprüche, wobei die Vielzahl der Kunststoffversickerungseinheiten zum Zwecke des Transportierens und Lagerns temporär miteinander gekoppelt sind, wobei die Vielzahl von Kunststoffversickerungseinheiten ein erstes Paar von Kunststoffversickerungseinheiten umfasst, die temporär miteinander gekoppelt sind, wobei das Oberdeck einer ersten Kunststoffversickerungseinheit temporär mit der mindestens einen Säule einer zweiten Kunststoffversickerungseinheit gekoppelt ist, wobei die Vielzahl von Kunststoffversickerungseinheiten weiter ein zweites Paar von Kunststoffversickerungseinheiten umfasst, die temporär miteinander gekoppelt sind, wobei das Oberdeck einer dritten Kunststoffversickerungseinheit temporär mit mindestens einer Säule einer vierten Kunststoffversickerungseinheit gekoppelt ist.

13. Vielzahl von Kunststoffversickerungseinheiten nach Anspruch 12, wobei das erste Paar von Kunststoffversickerungseinheiten auf das zweite Paar von Kunststoffversickerungseinheiten gestapelt ist, und/oder
weiter umfassend ein drittes und ein viertes Paar von Kunststoffversickerungseinheiten, die in derselben Weise wie das erste und zweite Paar von Kunststoffversickerungseinheiten gekoppelt und gestapelt sind, und benachbart zu dem ersten und zweiten Paar von Kunststoffversickerungseinheiten eingerichtet sind, und
wobei das zweite Paar von Kunststoffversickerungseinheiten so eingerichtet ist, dass die mindestens eine Säule (6) der vierten Kunststoffversickerungseinheit eingerichtet ist, um sich in einem Raum zwischen den Oberdecks der ersten und zweiten Kunststoffversickerungseinheit zu befinden, und/oder
weiter umfassend ein drittes und viertes Paar von Kunststoffversickerungseinheiten, die in derselben Weise wie das erste und zweite Paar von Kunststoffversickerungseinheiten gekoppelt sind, und benachbart zu dem ersten und zweiten Paar von Kunststoffversickerungseinheiten eingerichtet sind.

14. Vielzahl von Kunststoffversickerungseinheiten nach Anspruch 12 oder 13, wobei die Vielzahl von Kunststoffversickerungseinheiten miteinander zusammengeschnallt sind unter Verwendung von Umschnürungsbändern, und/oder wobei die Vielzahl von Kunststoffversickerungseinheiten mit mindestens einem Holzbalken zusammengebunden sind.

## Revendications

1. Unité d'infiltration en plastique (2), comprenant :
une plate-forme supérieure (4) qui s'étend dans un plan, la plate-forme supérieure (4) ayant un côté inférieur (29),
au moins un pilier (6) s'étendant dans une direction à partir de la plate-forme supérieure (4) pour supporter la plate-forme supérieure, dans laquelle la plate-forme supérieure comprend au moins un premier raccord intégré (101) et le au moins un pilier (6) comprend au moins un second raccord intégré (103), pour retenir provisoirement en place l'unité d'infiltration en plastique avec une autre unité d'infiltration en plastique identique (2') comprenant au moins un autre pilier (6'), le au moins un autre pilier (6') comprenant au moins un autre second raccord intégré (103'),
dans laquelle l'unité d'infiltration en plastique (2) et l'autre unité d'infiltration en plastique (2') sont raccordables, de sorte que dans un agencement accouplé, le au moins un pilier (6') de l'autre unité d'infiltration en plastique identique (2') soit retenu en place au niveau du côté inférieur de la plate-forme supérieure (4) de l'unité d'infiltration en plastique (2), **caractérisée en ce que** : le au moins un premier raccord intégré (101) est un raccord mâle comprenant une broche s'étendant à partir du côté inférieur de la plate-forme supérieure (4), **en ce que** : le au moins un second raccord intégré (103) est un au moins un raccord femelle comprenant une ouverture ménagée dans une extrémité distale du au moins un pilier (6), et **en ce que** : le au moins un pilier (6) comprend un pied (22) ayant un côté inférieur positionné au niveau de l'extrémité distale du au moins un pilier, et l'ouverture est ménagée dans le côté inférieur du pied (22),
de sorte que la broche (101) et l'ouverture (103) dans le côté inférieur du pied (22) raccordent provisoirement, lors de l'utilisation, l'unité d'infiltration en plastique (2) avec ladite autre unité d'infiltration en plastique identique (2'), de sorte que le au moins un pilier (6') de l'autre unité d'infiltration en plastique (2') soit provisoirement raccordable au côté inférieur de la plate-forme supérieure (4) de l'unité d'infiltration en plastique (2).

2. Unité d'infiltration en plastique selon l'une quelconque des revendications précédentes, dans laquelle le raccordement entre l'unité d'infiltration en plastique et l'autre unité d'infiltration en plastique identique est formé par au moins un parmi un raccordement du au moins un premier raccord intégré (101) avec au moins un autre second raccord intégré identique (103') et un raccordement du au moins un second raccord (103) avec au moins un autre premier raccord intégré identique (101').

3. Unité d'infiltration en plastique selon l'une quelconque des revendications précédentes, dans laquelle les au moins un premier et second et au moins d'autres premier et second raccords intégrés (101, 101', 103, 103') sont formés d'un seul tenant dans la structure de l'unité d'infiltration en plastique.

4. Unité d'infiltration en plastique selon l'une quelconque des revendications précédentes, dans laquelle le côté inférieur de la plate-forme supérieure (4) comprend une région périphérique externe (107) dans laquelle le au moins un premier raccord intégré (101) est positionné.

5. Unité d'infiltration en plastique selon l'une quelconque des revendications précédentes, dans laquelle le au moins un pilier (6) s'étend dans une direction longitudinale et a un axe longitudinal, dans laquelle le au moins un pilier (6) comprend un compartiment central (8) s'étendant le long de l'axe longitudinal et au moins un compartiment supplémentaire (10) s'étendant dans la direction longitudinale, dans laquelle le au moins un compartiment supplémentaire (10) entoure au moins une partie du compartiment central (8), et dans laquelle le au moins un second raccord intégré (103) est fourni dans le au moins un compartiment supplémentaire (10).

6. Unité d'infiltration en plastique selon l'une quelconque des revendications précédentes, dans laquelle la broche (101) comprend une première partie de plaque (109) et une seconde partie de plaque (111), les première et seconde parties de plaque (109, 111) ayant une extrémité distale, la première partie de plaque (109) ayant une région centrale s'étendant dans une direction d'insertion de la broche (101), dans laquelle les première et seconde parties de plaque (109, 111) s'amincissent vers l'extrémité distale, dans laquelle la seconde partie de plaque (111) s'étend à partir de la région centrale, et dans laquelle les première et seconde parties de plaque (109, 111) sont formées d'un seul tenant, et/ou dans laquelle le au moins un raccord mâle intégré (101) a une section transversale en forme de « T », et/ou
dans laquelle le au moins un raccord femelle intégré (103) comprend un évidement (103) formé dans une surface de côté inférieur du au moins un pilier (6), l'évidement ayant une section transversale au moins en partie circulaire, dans laquelle l'évidement (103) comprend en outre une pluralité d'entailles s'étendant à l'écart de la partie circulaire de l'évidement.

7. Unité d'infiltration en plastique et une autre unité d'infiltration en plastique identique selon l'une quelconque des revendications précédentes, dans laquelle l'unité d'infiltration en plastique et l'autre unité d'infiltration en plastique identique comprennent un nombre pair d'au moins quatre piliers (6), et dans laquelle la plate-forme supérieure de l'unité d'infiltration en plastique et de l'autre unité d'infiltration en plastique s'étendent dans un plan et ont une forme quadrilatérale, la plate-forme supérieure (4) ayant une région périphérique s'étendant autour de la périphérie de la plate-forme supérieure et quatre coins, dans laquelle les au moins quatre piliers sont agencés vers les coins de la plate-forme supérieure, dans laquelle une pluralité de premiers raccords intégrés (101) sont disposés sur le côté inférieur des plates-formes supérieures, respectivement, et une pluralité de seconds raccords intégrés (103) sont disposés sur les au moins quatre piliers, respectivement, dans laquelle sur le côté inférieur de la plate-forme supérieure dans une région définie entre les piliers, la pluralité de premiers raccords intégrés (101) sont disposés par paires et dans la région périphérique, la pluralité de premiers raccords intégrés (101) sont disposés unitairement, de sorte que lorsque l'unité d'infiltration en plastique est amenée en contact avec une autre unité d'infiltration en plastique retournée, les piliers de l'unité d'infiltration en plastique viennent en prise avec les premiers raccords intégrés (103') de l'autre unité d'infiltration en plastique et les piliers de l'autre unité d'infiltration en plastique viennent en prise avec les premiers raccords intégrés (101) de l'unité d'infiltration en plastique.

8. Unité d'infiltration en plastique selon l'une quelconque des revendications précédentes, dans laquelle l'unité d'infiltration en plastique et l'autre unité d'infiltration en plastique identique comprennent six piliers et vingt premiers raccords intégrés, et/ou dans laquelle l'unité d'infiltration en plastique et l'autre unité d'infiltration en plastique identique ont la même construction, et/ou dans laquelle la plate-forme supérieure (4) est une construction quadrilatérale s'étendant dans une première direction (y) et une deuxième direction (x), et ayant une épaisseur s'étendant dans une troisième direction (z).

9. Unité d'infiltration en plastique selon l'une quelconque des revendications précédentes, dans laquelle la plate-forme supérieure (4) s'étend dans un plan et une direction longitudinale du au moins un pilier est sensiblement perpendiculaire au plan de la plate-forme supérieure.

10. Unité d'infiltration en plastique selon l'une quelconque des revendications précédentes, comprenant en outre au moins une saillie (201) et au moins un évidement (203) pour recevoir la saillie, la au moins une saillie (201) et le au moins un évidement (203) étant disposés sur une surface supérieure de la plate-forme supérieure, de sorte que lorsque la surface supérieure de la plate-forme supérieure est amenée en contact avec la surface supérieure d'une plate-forme supérieure retournée de l'autre unité d'infiltration en plastique, la au moins une saillie (201) sur l'unité d'infiltration en plastique est reçue par le au moins un évidement de l'autre unité d'infiltration en plastique, ou vice versa, pour empêcher un mouvement de coulissement entre la plate-forme supérieure (4) de l'unité d'infiltration en plastique et la plate-forme supérieure de l'autre unité d'infiltration en plastique.

11. Unité d'infiltration en plastique selon l'une quelconque des revendications précédentes, dans laquelle le côté inférieur de la plate-forme supérieure (4) comprend un bord chanfreiné (307) qui est agencé de sorte à coopérer avec un bord chanfreiné (307') d'une autre unité d'infiltration en plastique.

12. Pluralité d'unités d'infiltration en plastique selon l'une quelconque des revendications précédentes, dans laquelle la pluralité d'unités d'infiltrations en plastique sont provisoirement accouplées les unes aux autres à des fins de transport ou de stockage, la pluralité d'unités d'infiltration en plastique comprend une première paire d'unités d'infiltration en plastique provisoirement accouplées l'une à l'autre, dans laquelle la plate-forme supérieure d'une première unité d'infiltration en plastique est provisoirement accouplée au au moins un pilier d'une deuxième unité d'infiltration en plastique, la pluralité d'unités d'infiltration en plastique comprenant en outre une deuxième paire d'unités d'infiltration en plastique provisoirement accouplées l'une à l'autre, dans laquelle la plate-forme supérieure d'une troisième unité d'infiltration en plastique est provisoirement accouplée au au moins un pilier d'une quatrième unité d'infiltration en plastique.

13. Pluralité d'unités d'infiltration en plastique selon la revendication 12, dans laquelle la première paire d'unités d'infiltration en plastique est empilée sur la deuxième paire d'unités d'infiltration en plastique, et/ou
comprenant en outre une troisième et une quatrième paire d'unités d'infiltration en plastique accouplées et empilées de la même manière que les première et deuxième paires d'unités d'infiltration en plastique, et agencées de manière adjacente aux première et deuxième paires d'unités d'infiltration en plastique, et
dans laquelle la deuxième paire d'unités d'infiltration en plastique est agencée de façon à ce que le au moins un pilier (6) de la quatrième unité d'infiltration en plastique soit agencé de sorte à être positionné dans un espace entre les plates-formes supérieures des première et deuxième unités d'infiltration en plastique, et/ou
comprenant en outre des troisième et quatrième paires d'unités d'infiltration en plastique accouplées de la même manière que les première et deuxième paires d'unités d'infiltration en plastique, et agencées de manière adjacente aux première et deuxième paires d'unités d'infiltration en plastique.

14. Pluralité d'unités d'infiltration en plastique selon la revendication 12 ou 13, dans laquelle la pluralité d'unités d'infiltration en plastique sont attachées les unes aux autres au moyen de bandes d'attache, et/ou dans laquelle la pluralité d'unités d'infiltration en plastique sont attachées les unes aux autres au moyen d'au moins une poutre en bois.
